# EUROPEAN PATENT APPLICATION

(11) **EP 2 784 735 A1**
(43) Date of publication of application: **01.10.2014**
(21) Application number: 14160708.5
(22) Date of filing: 19.03.2014
(51) Int. Cl.: G06Q 20/32, G06Q 20/36

(54) **Point-of-sale terminal based mobile electronic wallet registration, authorization and settlement**

(30) Priority: 24.03.2013 US 201361804691 P; 21.05.2013 US 201313898630
(71) Applicant: i-POS Systems LLC, Manhasset, NY 11030 (US)
(72) Inventor: Zenou, Mony S., Great Neck, NY New York 11023 (US)
(74) Representative: Schneider Feldmann AG Patent- und Markenanwälte

(57) **Abstract**

Methods for conducting a transaction of a mobile electronic wallet (EW) with a merchant electronic point-of sale (POS) terminal include use of the POS terminal to provide authorization for the transaction directly to an EW terminal server (TS) without involvement of a transaction gateway. The EW-TS receives a transaction request from an authenticated EW application in a mobile device and provides an approval for stored EW-TS card data delivered to the POS terminal. The POS terminal authorizes the transaction and submits the authorization request to a host processor. In some embodiments, the POS terminal also enrolls an EW in a mobile EW program. In some embodiments, the POS terminal also settles the transaction. In some embodiments, an EW sends checking account information to be processed by check services of the POS terminal. In some embodiments, additional consumer payment data is captured during the EW enrollment.

## Description

### FIELD

Embodiments disclosed herein relate in general to commerce using an electronic wallet (EW) and a merchant electronic point-of-sale (POS) terminal with or without peripheral devices, and more particularly to the use of mobile devices which carry an EW to register, subscribe, transmit payment and related data and settle transactions through or with a POS terminal.

### BACKGROUND

There are three known types of Electronic Wallets (EWs) with three distinctive approaches to provide consumers with payment capabilities: (1) bank based EWs targeted to card issuers such as Visa, MC, AMEX or Discover, which issue their own cards to be included in EWs, usually to existing card holders; (2) consumer based EWs such as Google Wallet or ISIS, which offer to store an issuer card in a "mobile EW", i.e. in a personal mobile device enabled with wireless means such as Wi-Fi, Bluetooth and GPRS or CDMA, for example a cell phone, a PDA or a portable tablet computer. Such a mobile EW can store various cards or payment forms electronically. In the following description, a mobile EW may sometimes be referred to simply as "EW", with the understanding that the reference is to an EW application or "EW App" in a mobile device. In some cases, an E-commerce - Internet based payment service such as PayPal may issue a physical (e.g. plastic) card for its online account members and associate it with an existing issuer, In Pay Pal's case, such cards or the original PayPal account may also be stored in a mobile EW; and (3) merchant-centric EWs designed predominantly to increase patron loyalty and to enable easy payment via EW for a particular store, or, in some cases, to use an affinity program for recognition and acceptance with loyalty privileges in affiliate or other stores. Usually, such inter-location affinity or loyalty is managed by an EW transaction server (also referred to simply as "EW-TS" or "TS"), which manages, stores, and keeps consumer card records and transaction data securely.

Electronic wallets may also store card data in the mobile devices by adding a secure authentication between them and a specific POS system. For example, in the "TabbedOut" restaurant mobile application, encrypted card data stored in an EW is authenticated by a restaurant POS system named "MICROS". When a transaction is conducted directly between the EW and MICROS, card data is decrypted and used to submit a payment to the card association.

Once a card holder decides to join a particular EW, his/her card data is stored in a respective particular EW-TS. Credit, debit, prepaid, gift or loyalty card data are stored in a secure Payment Card Industry Data Security Standard (PCI-DSS) facility. The stored card information is used to authorize a transaction after proper authentication with the EW-TS. The communication between the EW and the POS system may be RFID enabled (one way communication) or peer-to-peer (two way communication) using for example near field communication (NFC) readers installed on both POS terminals and cash registers. The communication between the EW and the POS terminal or between the EW and the EW-TS must use advanced security tools such as specific encrypted authentication data, tokenization, password identification, or a combination thereof. In this case, authentication is not conducted between the EW and the EW-TS, but directly between the EW App and the POS system. Once authenticated, a secure transaction will take place between the EW-TS and the EW. The EW will be identified, associated with secure card data located in the EW-TS and, after authentication, consumer card data will be authorized to submit payment information to card association issuers. The issuers will provide an approval or a decline response, and an appropriate message will be returned to the mobile device. Consequently, the EW-TS needs to use a transaction gateway to connect to host processors for authorizations. Such transaction gateways increase transactions costs and require the EW-TS to update the POS terminal after the transaction authorization is obtained. To clarify, all currently known mobile EW transactions conducted through an EW-TS use a Web (or Internet) based transaction gateway.

None of the known systems and methods that use a PCI DSS location to store card data uses a POS terminal to conduct the actual authorization to the card issuers. Similarly, no known methods use a POS terminal to register consumer card data at the POS terminal while authorizing a card, to conduct a special registration process, to capture additional relevant payment data, such as an electronic signature, or to enroll a new member to an EW.

### SUMMARY

In view of the aforesaid it would be advantageous to have, methods and systems for conducting transactions using an EW and a POS terminal that do not suffer from the disadvantages of known methods and systems. In particular, it would be advantageous to have methods and systems for conducting transactions using an EW and a POS terminal that do not need to use a transaction gateway and that allow a POS terminal to: (1) authorize and check rewards eligibility in real-time without any other supporting system or card, (2) settle a transaction and (3) enroll consumers and consumer payment data through a new EW into an EW program.

It should be noted that the term "real-time" as used herein may also mean "substantially in real-time".

The following terms and definitions are used in the description:
"Payment instrument" refers to any type of instrument that can be used to pay for a transaction, including consumer credit, debit, gift and loyalty cards as well as checks.
"Payment instrument data" refers to data identifying, or specific to, a payment instrument.
"Payment instrument issuers" refers to credit card issuers, debit card issuers, other type of card issuers and banks (holding checking accounts).
"Transaction data" refers to data captured from a payment instrument. The transaction data is sent from the POS terminal to the EW-TS and to host processors for authorization, and is stored in a either truncated or secured format in the EW-TS for payment transaction, loyalty tracking, rewards and reporting purposes.
"Card data" refers to credit or debit card data, magnetic strip or RFID reader, smart card or "subscriber identity module ("SIM") data or "magnetic ink character recognition ("MICR") data (for checks). The card data is secured in an encrypted format at the EW-TS after the registration from the POS terminal or a subsequent addition to a consumer EW, and is used upon a call from a POS terminal to conduct a payment transaction.
"Consumer payment data" refers to supporting documents or images used to identify a consumer authenticity at the transaction time, for example a real signature, an electronic signature, a biometric signature, a photograph, etc.

Embodiments disclosed herein teach utilization of a POS terminal for authorizing a transaction with a card association by sending a request for authorization to a card issuer after tokenization and authentication between a mobile EW and the EW-TS are completed. Tokenization and/or authentication are performed between the mobile EW and the EW-TS. Card data and, optionally, consumer payment data (such as an electronic signature) stored in the EW-TS, are then sent (e.g. via a secure connection such as SSL) from the EW-TS to the POS terminal. The POS terminal then authorizes the transaction. In contrast with known methods, the EW-TS receives a message of approval from the POS terminal and not from a transaction gateway. This eliminates the added costs of gateway-based payment processing and removes the added complexity in the acceptance of a mobile EW transaction process.

Embodiments disclosed herein also teach utilization of a POS terminal for registration of a mobile EW, replacing the current need for a transaction gateway. Embodiments disclosed herein further teach utilization of a POS terminal for a transaction settlement (submission of the authorization approval for clearance and payment by the host processors of EW transactions). The POS terminal also reduces (and in some cases eliminates) the need for computer- or phone-based registration of consumer card data to the EW-TS and EW, by using the initial transaction data generated by swiping a card through (or contacting) the POS terminal to register a particular card to a "card on file" record in the EW-TS, or by adding an additional card to an existing EW and EW-TS via the same procedure. Certain additional data fields such as "consumer photo", "fingerprint", "electronic imprint of signature", etc., may prompt for additional EW registration as either a requirement or optionally, with the main purpose to: (1) add to identification instruments of the purchasing consumer, or (2) to enable such data to be appended to a customary POS terminal transaction, i.e. provide a digital signature to a POS terminal that does not have a special signature capture device attached thereto. A transaction with additional consumer payment data can be performed either through the POS terminal or through the phone or the Internet.

In various embodiments disclosed herein, a POS terminal, verified by its location, a number, a unique identification such as (but not limited to) a Quick Response Bar Code ("QC") generated by the POS terminal or attached to it or by any other means as needed; (1) registers a new payment instrument to EW-TS programs; (2) allows an end user to set an initial personal identification number (PIN) for accessing a new EW account via a first transaction with a new card, a check reader or consumer payment data such as signature capture at the POS terminal; (3) sends a new membership (enrollment) request to the EW-TS and, subsequently; (4) on the initial registration transaction, processes the payment instrument to complete the sale from the POS terminal or through the EW-TS In a future transaction by a consumer at the merchant location using the POS terminal, the consumer uses his/her EW to send a request to the EW-TS and the EW-TS sends to the POS terminal the secured payment data of payment instruments registered to a particular EW via SSL or via any other Internet secured communication protocol. The POS terminal enables authorization of the sales amount with the payment instrument received from the EW-TS. After the authorization, the POS terminal updates the EW-TS, which in turn updates the mobile EW with the transaction results. Additionally, the EW-TS can verify eligibility for rewards, provide free service, product, discount and other promotion in real-time, and return a confirmation message to the POS terminal to reflect and adjust a sales amount. Moreover, after registration of a payment instrument to the EW-TS via the POS terminal, the EW-TS can be used for transactions conducted not only by the EW application but also via more common payment methods (not through a POS terminal) such as the phone or the Internet.

All transaction reports for the merchant are stored in a POS terminal database ("DB"). Consumers may check their balances and transaction history on either the EW or the EW-TS. Similarly, the settlement is performed by the POS terminal and not by the EW-TS. The merchant may also optionally view transaction summaries, history and details on both the POS terminal and the EW-TS.

In some embodiments, if a payment option is "checking account", a customer account is "captured" by scanning a check on the POS terminal or a peripheral device connected thereto. The transaction then follows the same process of asking for a cell phone number and password, confirming the account in the EW, confirming with a PIN through login into the EW-TS and enabling a same or subsequent transaction to use the "checking account" payment instrument via the EW. The POS terminal then sends an authorization request with checking account data stored in the EW-TS for authorization to process the charge.

In some embodiments, a 'signature capture" program may be created on a smart phone and stored on the EW or the EW-TS. The signature can be captured either during the registration process to an EW-TS or as a stand alone service for the sole purpose of supporting POS terminal transactions performed by the POS terminal without an EW-TS storing payment instruments, or directly from a mobile device. The signature can be stored in either the EW or the EW-TS and serves as additional payment data that may be used independently from the payment instrument used in a transaction. For example, the signature can be called from the EW-TS and used in a paperless transaction and a POS transaction receipt is transmitted to a consumer e-mail address. This provides a "green" POS terminal. By enabling electronic data on a mobile application with the consumer, a merchant operating a POS terminal can collect consumer data, track purchasing data and enable cell phone-based loyalty and rewards programs.

In some embodiments, a real-time loyalty program is created, driven only by the POS terminal and the EW-TS without any physical cards or a gift processor. The EW-TS checks consumer rewards eligibility on every transaction performed and provides a discounted transaction free purchase of another reward while conducting a payment from an EW to the EW-TS.

Conducting a transaction between the EW and the EW-TS through a POS terminal may minimize merchant fees. For example, a restaurant transaction (combining gross authorization amount and actual tip amount into a total amount) is normally sent in two separate transactions and charged more than a single sale transaction. As taught herein, a mobile EW can be programmed to separate the two (gross authorization and tip) amounts while the POS terminal will transmit it as one, in a single transaction flow.

In an embodiment there is provided a method for conducting a transaction between an EW and a merchant POS terminal, the EW associated with an EW App included in a mobile device, the method comprising the steps of: by an EW-TS, receiving a transaction request from a particular EW and from an authenticated POS terminal for a sales amount; sending respective EW-associated payment instrument data back to the POS terminal, and receiving from the POS terminal authorization approval for the transaction, wherein the authorization approval is received directly from the POS terminal without use of a transaction gateway.

In an embodiment there is provided a method for conducting a transaction between an EW and a merchant POS terminal, the EW associated with an EW App included in a mobile device, the method comprising the steps of: by an EW-TS, receiving a transaction request with a sales amount, cell phone number and password from a POS terminal, sending a selected payment instrument to the POS terminal, and receiving from the POS terminal authorization approval for the transaction, wherein the authorization approval is received directly from the POS terminal without use of a transaction gateway.

In an embodiment there is provided a method for conducting a transaction between an EW and a merchant POS terminal, the EW associated with an EW App included in a mobile device, the method comprising the steps of: by a POS terminal, sending a transaction request obtained from a particular EW to an electronic wallet terminal server (EW-TS), the transaction request including a sales amount and a request for supporting payment instrument data, receiving from the EW-TS respective EW-associated payment instrument, and authorizing the transaction, wherein the authorization is provided directly from the POS terminal to the EW-TS without use of a transaction gateway.

In an embodiment, the particular EW is included in a cell-phone and the transaction request from the POS terminal includes an EW personal identification number and a cell-phone number.

In an embodiment, the transaction is a pay-by-phone transaction requiring the EW be be enrolled in a mobile EW program. In an embodiment, the step of receiving a transaction request includes, by the POS terminal, enrolling the EW in a mobile EW program.

In an embodiment, the transaction involves a restaurant bill. The sales amount may be entered by the EW and includes two partial sales amounts requesting a single authorization approval.

In an embodiment, the payment instrument is a credit card, debit card or a check.

In an embodiment, the step of receiving a transaction request from a particular EW includes receiving a request for a signature file and wherein the step of sending respective EW-associated payment instrument data back to the POS terminal includes sending the signature file to the POS terminal in real-time.

In an embodiment, the step of sending respective EW-associated payment instrument data is preceded by the step of checking for respective EW-associated reward, discount or promotion eligibility.

In an embodiment, if such eligibility is found, the method includes the step of sending respective EW-associated reward, discount or promotion data together with the payment instrument data back to the POS terminal.

In an embodiment, the step of receiving a transaction request is preceded by the step of, by the POS terminal, enrolling the EW in a mobile EW program.

In an embodiment, the step of sending a selected payment instrument to the POS terminal includes sending the selected payment instrument together with consumer payment data.

In an embodiment, the payment data is selected from the group consisting of a real signature, an electronic signature, a biometric signature, a photograph and a combination thereof.

Aspects of embodiments also relate to a computer program having instructions adapted to carry out any one of the method steps disclosed herein.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Aspects, embodiments and features disclosed herein will become apparent from the following detailed description when considered in conjunction with the accompanying drawings, in which:
FIG. 1A shows a flow chart of an embodiment of a method disclosed herein that allows EW payment with POS terminal authorization;
FIG. 1B shows a flow chart of another embodiment of a method disclosed herein that allows EW payment with POS terminal authorization;
FIG. 1C shows details of the method embodiments in FIGS. 1A and 1B;
FIG. 1D shows schematically in a block diagram an embodiment of a system disclosed herein that allows EW payment with POS terminal authorization;
FIG. 2 shows in a flow chart the exemplary use of a mobile device which includes an EW for a "pay-at-the table" transaction with POS terminal authorization in a restaurant;
FIG. 3 shows in a flow chart an exemplary consumer enrollment procedure using a mobile EW and a POS terminal;
FIG. 4 shows in a flow chart a known exemplary transaction flow between a mobile EW and a POS system and using a payment gateway;
FIG. 5 shows an exemplary payment processing using a POS terminal according to a method disclosed herein.

### DETAILED DESCRIPTION

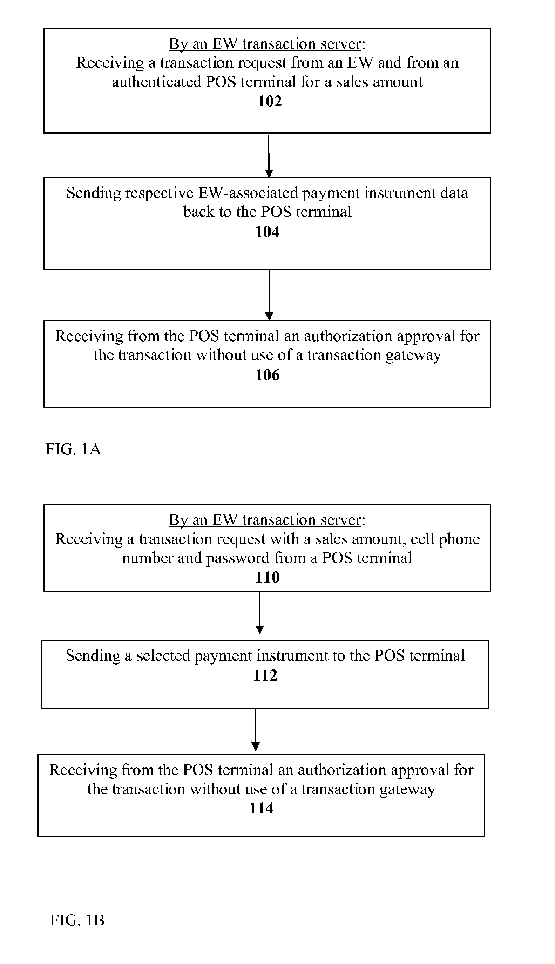

FIG. 1A shows a flow chart of an embodiment of a method disclosed herein that allows EW payment with POS terminal authorization. The method allows conducting a transaction between an EW and a merchant POS terminal. The EW has an EW App associated therewith and included in a mobile device (e.g. cell phone). An EW-TS receives a transaction request from an EW and from an authenticated POS terminal for a sales amount in step **102,** sends respective EW-associated payment instrument data back to the POS terminal in step **104,** and receives from the POS terminal an authorization approval for the transaction in step **106.** Advantageously, the authorization approval is transmitted directly from the POS terminal to the EW-TS without use of a transaction gateway.

FIG. 1B shows a flow chart of another embodiment of a method disclosed herein that allows EW payment with POS terminal authorization. Similar to the embodiment in FIG. 1A, in this this embodiment too the authorization approval is transmitted directly from a POS terminal to the EW-TS without use of a transaction gateway. The EW-TS receives a transaction request with a sales amount, cell phone number and password from the POS terminal in step **110,** sends a selected payment instrument to the POS terminal in step **112,** and receives from the POS terminal an authorization approval for the transaction without use of a transaction gateway in step **114.** As in the embodiment in FIG. 1A, the authorization approval is transmitted directly from the POS terminal to the EW-TS without use of a transaction gateway.

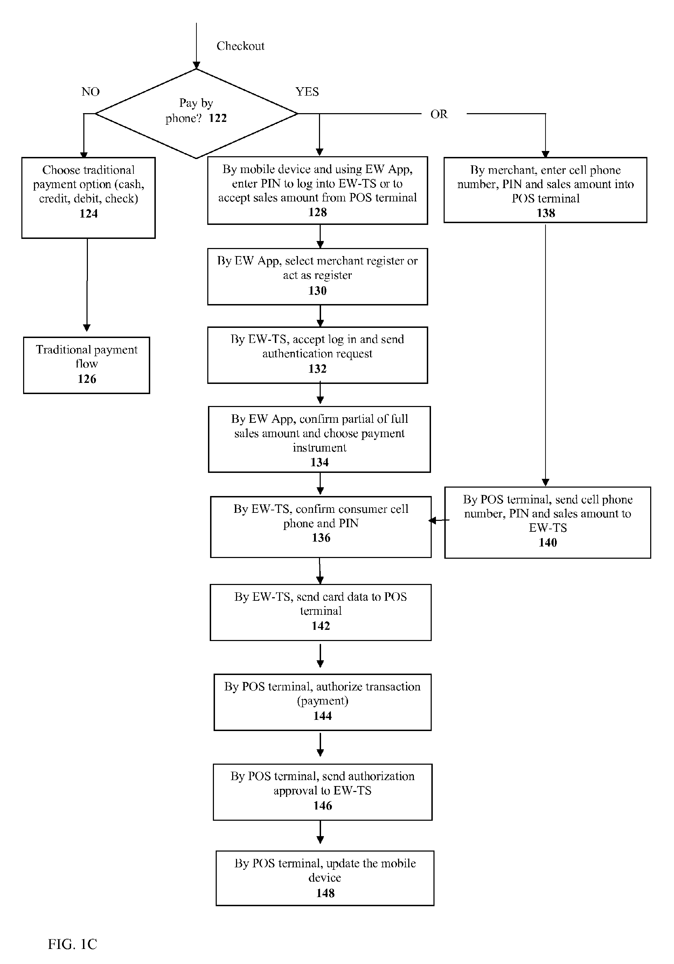

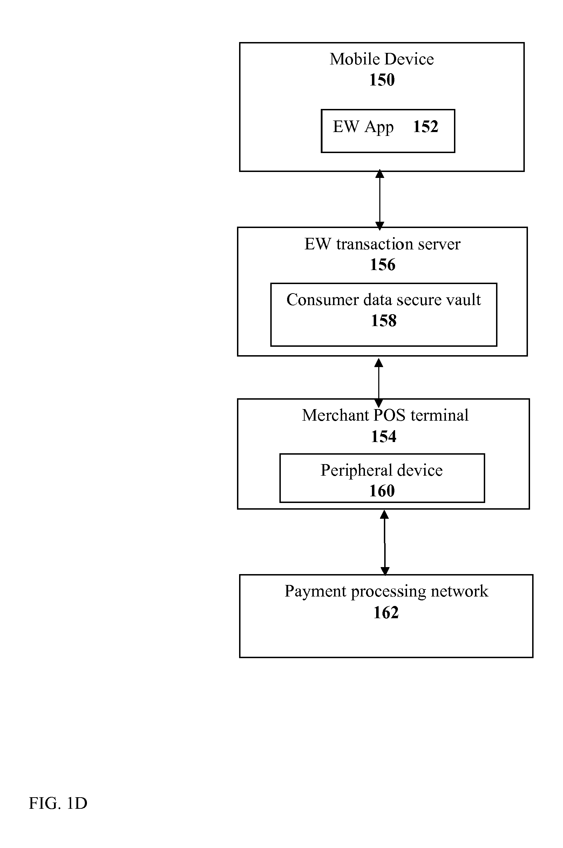

FIG. 1C shows details of the method embodiments in FIGS. 1A and 1B. The methods may be implemented using exemplarily a system embodiment shown in FIG. 1D. The payment for the transaction is performed using a mobile device **(150** in FIG. 1D) having an EW App **(152** in FIG. 1D), and the transaction is authorized by a POS terminal **(154** in FIG. 1D). The POS terminal may have one or more peripheral devices **(160** in FIG. 1D) associated therewith. Such peripheral devices may include a signature capture device, a check reader, a driver license or check imager, a biometrics reader, etc. The mobile device is referred to hereinafter as a "cell phone" for simplicity. An EW-TS **(156** in FIG. 1D) connects on one hand to the EW App and on another hand to the POS terminal (and through it to a peripheral device, if present) to request card authorization from card issuers or consumer banks payment instrument issuers. The flow follows a consumer who proceeds to a merchant checkout after purchasing one or more items in a shopping session in a store, on the phone, or online. The consumer may use a traditional payment option (i.e. cash, credit or debit card, or check), or may use the EW to pay for the purchase. In the scenario shown in FIG. 1A, it is assumed that the consumer is enrolled (registered) in an EW program. In the event the consumer is registered, the consumer is asked whether he/she wishes to pay by phone (i.e. use the EW) in step 122. If NO, then a traditional payment option is chosen to pay for the transaction in step **124** and the transaction follows a traditional payment flow in step **126.** If YES in step **122,** then in a first flow track, the consumer opens the EW App, logs into the EW-TS with his/her EW and PIN sequence and enters the sales amount into the cell phone or accepts a sales amount sent by the EW-TS in step **128.** The EW App selects a merchant register or acts as a register in step **130.** In step **132,** the EW-TS accepts the login and simultaneously, the EW App identifies the POS terminal (if there is more than one such terminal and if the identification was not done already in step **130)** to the EW-TS. The identification may be done by scanning an ID feature such as a QC code, by entering a POS terminal number or by other identification means. In some embodiments, the EW App enters or confirms a partial (e.g. in a split tender scenario or in a restaurant/bar) or full sales amount in step 134. Alternatively, the EW App may be used itself as a "register", thus, the EW sends the sales amount to the POS terminal through the EW-TS, while the POS terminal logs into the EW-TS, matches the request and continues the flow from step **136,** see below

In a second (and optional) flow track after a pay-by-phone (PbP) option is chosen in step 122, the POS terminal is chosen for payment and the cell phone number, password (PIN) and sales amount are entered into it in step **138.** This track can be used if the consumer does not have an EW APP but has only his/her cell phone number and password. In this track, a transaction using the POS terminal may speed up the EW payment process between step **128** and step **136** (by having the EW log into the EW-TS and enter PIN in step **128** and by leaving steps **130-134** to be performed by the POS terminal). The POS terminal sends the data entered to the EW-TS in step **140.** The EW-TS matches credentials in step **136** and allows (if matched) card data to the POS terminal in step **142.** The POS terminal then proceeds to authorization (approval or decline) in step **144** and sends an authorization message to the effect to the EW-TS in step **146,** which in turn updates the EW App in step **148.**

The major advantages of the method disclosed above are: the transaction is effected without a need for authentication through a gateway, the transaction cost is reduced, and all registered payment instruments are transacted with and by a single payment device - the POS terminal. Consequently, reporting, consolidation and management are easy and convenient. In addition, a merchant can have now a pay-by-phone solution with only a POS terminal, independent of his/her POS system, electronic cash register (ECR) or PC-based register. No changes are required to an existing merchant ECR or PC-based system to work with the EW App.

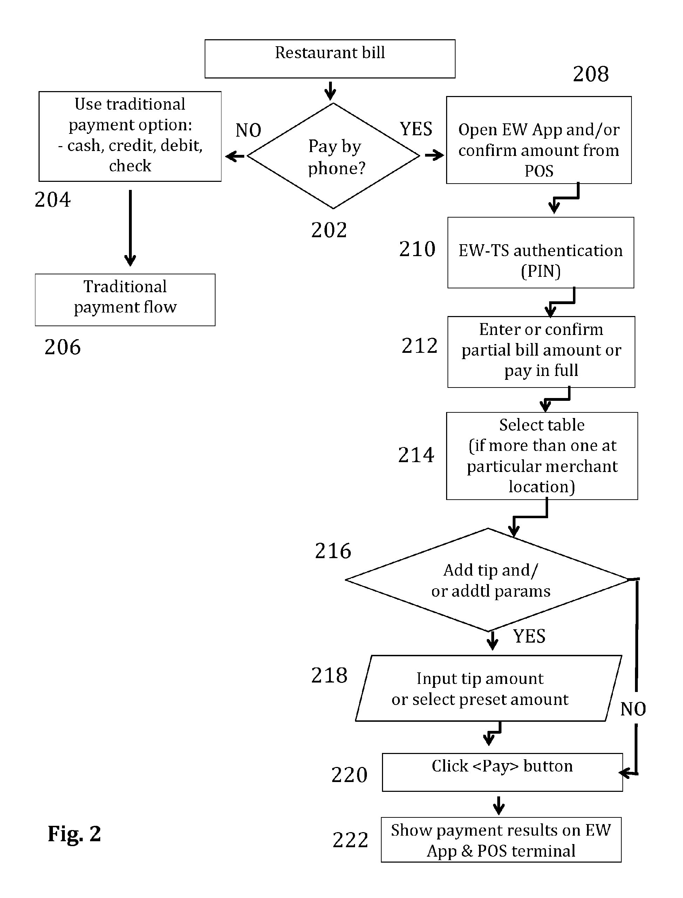

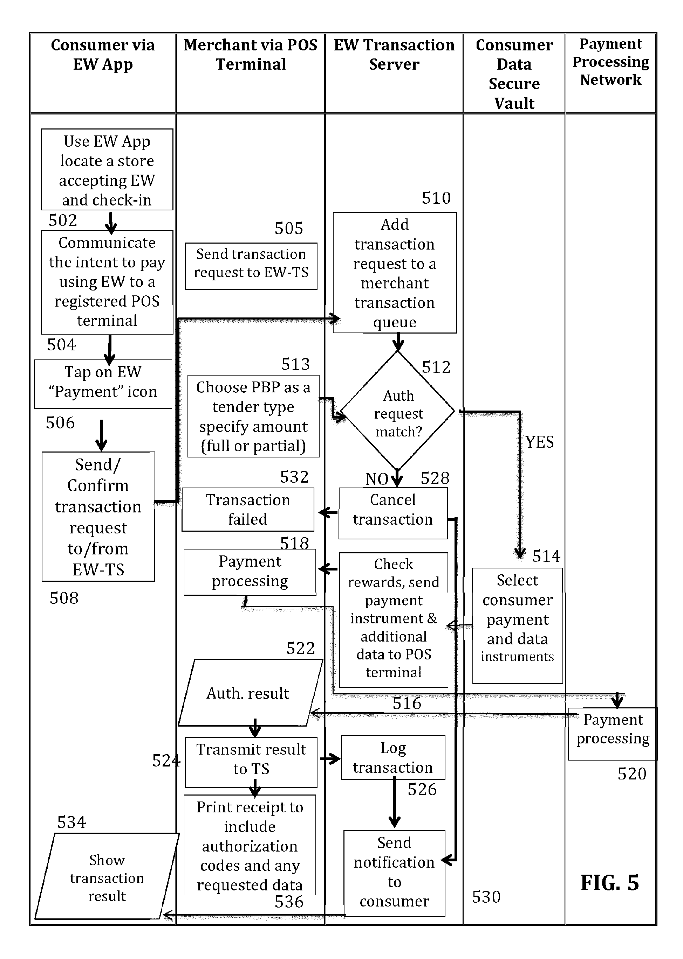

FIG. 2 shows in a flow chart the exemplary use of a mobile device (e.g. a cell phone) which includes an EW for a "pay-at-the-table" (e.g. in a restaurant) transaction with counter-top or wireless POS terminal authorization. The transaction is between a consumer and a waiter carrying a POS terminal. It is assumed that the consumer is enrolled in an EW program. The transaction begins with a restaurant bill presented by the waiter to the consumer. As in the method of FIG. 1, the consumer is asked whether he/she wishes to pay the bill by phone in step **202.** If NO, then a traditional payment option is chosen to pay the bill in step **204** and the transaction follows a traditional payment flow in step **206.** If YES in step **202,** the POS terminal connects to the EW-TS in step **208** and sends a payment request with all relevant payment data (such as table number, number of guests, etc,). Alternatively, the consumer opens the EW App, enters a PIN and confirms a bill amount received from the POS terminal. The request is authenticated by the EW-TS in step **210.** The bill amount plus any precalculated tip, is entered by the consumer into the EW App in step **212.** Optionally, additional identifying details (e.g. required by the location) such as table number, number of diners, etc., are provided in step **214** and a question on whether these details plus a tip should be added is posed in step **216.** If YES, the details and/or the tip are added to the bill and the total transaction amount is entered into the EW App in step **218,** and the final amount is submitted by clicking the EW App "Pay" button in step **220.** If NO in step **216,** the process goes directly to step **220.** A message is then sent from the EW-TS to the POS terminal, and the payment results are shown on the POS terminal and EW App in step **222.** The transaction flow then continues as outlined in FIG. 5, from step **516.**

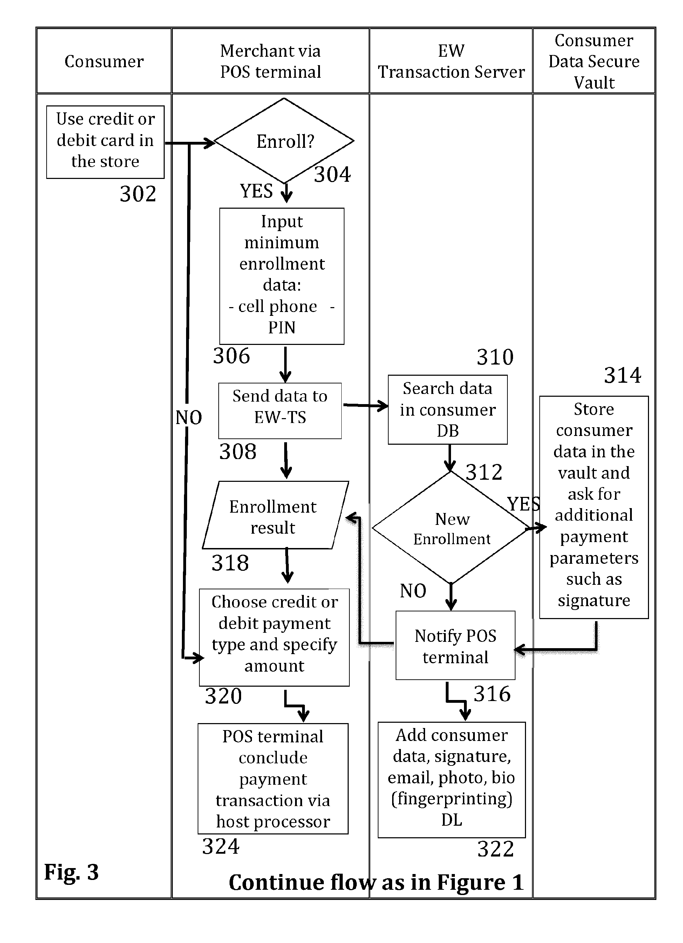

FIG. 3 shows in a flow chart an exemplary consumer enrollment procedure using a cell phone and a POS terminal. The procedure occurs exemplarily in a store and starts with the consumer using a credit card, debit card, or a check (via an attached peripheral device that scans the MICR or obtains a check image) to pay for a transaction in step **302.** The consumer is asked whether he/she wishes to enroll in a mobile EW program in step **304.** The EW program allows the consumer to conduct future transactions using his/her cell phone's EW App. If NO, then either that the consumer is already enrolled and may continue exemplarily as in the flow of FIG. 1, or he/she is not interested in enrolling, in which case the transaction may follow the traditional credit/debit card or check route. If YES, the merchant enters via the POS terminal enrollment data in addition to the type of payment instrument in step **306.** The enrollment data may include for example a cell-phone number and a PIN, an image, a real signature, an electronic signature, etc. The merchant (via the POS terminal) then sends the data to the EW-TS in step **308.** The EW-TS searches an associated database for matching data in step **310.** The search asks whether this is a new enrollment in step **312.** If this is a new enrolment (YES), the consumer enrollment data (exemplarily cell-phone number and PIN) are stored in a consumer data secure vault, i.e. an EW-TS DB in a PCI DSS location or in a stand alone PCI DSS DB **(158** in FIG. 1D) in step **314.** The EW-TS notifies the POS terminal that the enrollment is complete in step **316,** an enrollment result is provided to the merchant via the POS terminal in step **318** and the process continues to step **320**,̅ (which mirrors step **124** in FIG. 1C), after which the transaction continues exemplarily as in FIG. 1C.. If NO in step **312,** the EW-TS notifies the POS terminal in step **316.** The transaction then continues in step **322** with a traditional payment instrument process to card issuer approval and conclusion of the transaction. The card is now enrolled into the EW.

Note that some of the additional payment data such an image, a real signature, an electronic signature, etc. can complement or enhance a traditional POS terminal transaction without using any EW payment instrument for example by sending a signature image to a POS terminal transaction before or after an authorization

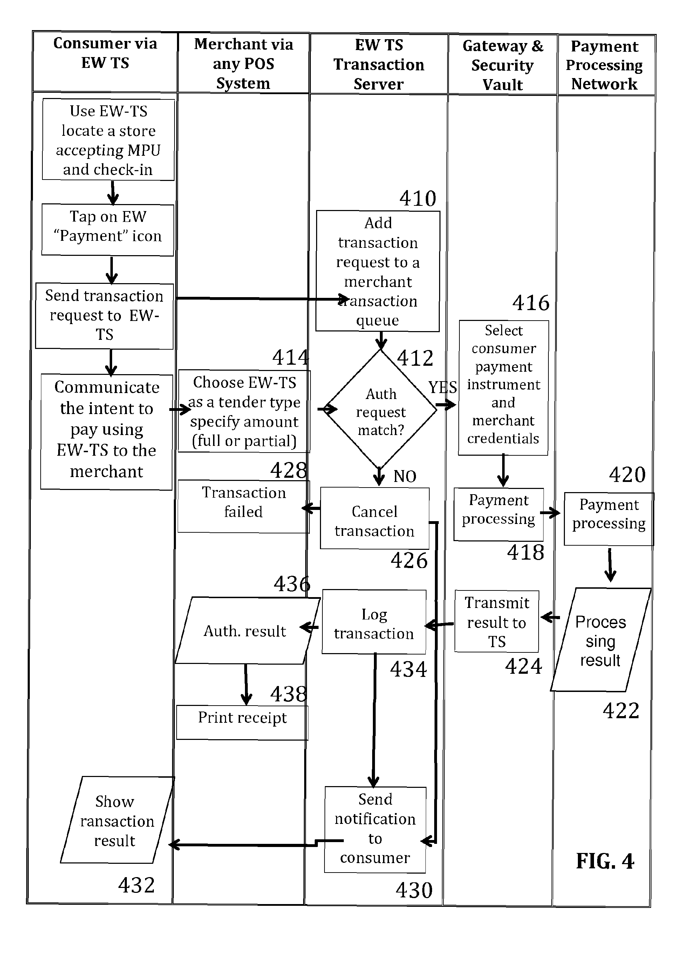

FIGS. 4 and 5 illustrate further the differences between known methods and the methods disclosed herein. Specifically, they emphasize the difference between an EW App that uses a transaction gateway to authorize a transaction through an Internet server after a request for an EW-TS (as currently known and done), and the use of a POS terminal to authorize the transaction after receiving card data from an EW-TS as taught herein.

FIG. 4 shows in a flow chart a known exemplary transaction flow between a mobile EW and a POS system (such as an ECR, a PC-based register, etc., but not a POS terminal) and using an Internet based transaction gateway. In a first option, the payment is through an ECR or a PC-based register. The consumer contacts the EW-TS with his/her cell phone, locates an EW-accepting store and checks-in (opens the EW App and logs into the EW-TS) in step **402.** A regular EW transaction as described exemplarily in FIG. 1A then follows. The consumer taps on the EW "Payment" icon in step **404,** sends a transaction request through the EW App to the EW-TS in step **406,** and communicates his/her intent to pay by phone using his EW App to the merchant in step **408.** The EW-TS server adds the transaction request to a merchant transaction queue in step **410.** Alternatively, in a second option from step **408** with either merchant or consumer operated POS terminals, in step **414** either party chooses pay-by-phone as a tender type after the amount has been entered or displayed. The EW-TS then checks if the request from the merchant location matches the EW request in step **412.** If YES, the request is sent via a transaction gateway to a gateway-secure vault DB for selection of a consumer payment instrument (such as a stored credit card) and merchant credentials in step **416.** The payment is then processed through the transaction gateway with the EW-TS in step **418,** and then processed by a payment processing network **(162** in FIG. 1D) in step **420.** A processing result is obtained in step **422.** The processing result is transmitted via the transaction gateway to the EW-TS in step **424.** The EW-TS logs the transaction in step **434** and provides the authorization to the merchant POS system in step **436.** The terminal then prints a receipt in step **438.**

If in the check of step **412** the answer is NO (the authorization request from the EW-TS does not match between the POS system and the EW App), the EW-TS cancels the transaction in step **426** and notifies the merchant that the transaction failed in step **428.** The EW-TS also notifies the consumer about the cancellation in step **430** and the consumer sees this notification on his EW App in step **432.**

Note that a common aspect of the two flows shown in FIG. 4 is that both require use of a transaction gateway.

FIG. 5 shows an exemplary payment processing using a POS terminal according to a method disclosed herein. In a first option, the payment is through an ECR or a PC-based register. The consumer contacts the EW-TS with his cell phone, locates an EW-accepting store and checks-in (opens the EW App and logs into the EW-TS) in step **502.** A regular EW transaction as described exemplarily in FIG. 1A then follows. The consumer taps on the EW "Payment" icon in step **504** communicates the intent to pay using EW to a registered merchant POS terminal and taps on the EW "Payment" icon in step **506,** and sends a transaction request to the EW-TS in step **508.** Alternatively, the POS terminal sends a specific transaction request with the specific amount to the EW-TS in step **505.** In this case, in step **506** the consumer confirms a transaction request from the EW-TS. In both options, the consumer then confirms his/her password to accept a sales amount in step **508.** The EW-TS server adds the transaction request to a merchant transaction queue in step **510.** Alternatively, in a second option, the merchant via the POS terminal chooses pay-by-phone as a tender type and specifies the sales amount in step **513.** The EW-TS then checks if a request for authorization from the merchant location matches the EW transaction request in step **512.** If the answer to check **512** is YES, then in step **514** a consumer payment instrument choice is selected from a secure vault directly by the EW-TS and returned to the POS terminal for card issuer processing. Advantageously, the payment instrument is not sent to a transaction gateway. The EW-TS verifies any reward eligibility, discount or promotion before retuning a final authorization amount to the POS terminal in step **516.** Note that in step **516** the EW-TS check for reward eligibility is driven only by EW-App and POS terminal purchases. The EW-TS checks consumer rewards eligibility in order to provide a discount, free purchuse, prizes, gifts etc while conducting a payment from the EW to the EW-TS and/or to the POS terminal.

Any relevant data such as a signature or special coupons are also sent through the EW-TS to the POS terminal in step **516,** and the payment is processed in the POS terminal in step **518.** The payment is then transmitted to the payment processing network for further processing in step **520.** The authorization result is transmitted to the merchant POS terminal in step **522.** After obtaining the processing result from a card issuer, a debit network or a bank (if a checking account is used), the POS terminal sends the transaction result to the EW-TS in step **524** and prints a receipt with authorization codes and any relevant attachment such as signature capture image in step **536.** The EW-TS logs the transaction in step **526** and sends notification to the consumer that the transaction is completed and logged in step **530.** The notification is showed to the consumer on his EW App in step **534.**

If in the check of step **512** the answer is NO, the EW-TS cancels the transaction in step **528** and notifies the merchant that the transaction failed in step **532.** The EW-TS also sends a notification to the consumer about the cancellation in step **530** and the consumer sees this notification on his EW App in step **534.** Note that throughout the transaction process there is no use of a transaction gateway.

The various features and steps discussed above, as well as other known equivalents for each such feature or step, can be mixed and matched by one of ordinary skill in this art to perform methods in accordance with principles described herein. Although the disclosure has been provided in the context of certain embodiments and examples, it will be understood by those skilled in the art that the disclosure extends beyond the specifically described embodiments to other alternative embodiments and/or uses and obvious modifications and equivalents thereof. Accordingly, the disclosure is not intended to be limited by the specific disclosures of embodiments herein. For example, any digital computer system can be configured or otherwise programmed to implement a method disclosed herein, and to the extent that a particular digital computer system is configured to implement such a method, it is within the scope and spirit of the disclosure. Once a digital computer system is programmed to perform particular functions pursuant to computer-executable instructions from program software that implements a method disclosed herein, it in effect becomes a special purpose computer particular to an embodiment of the method disclosed herein.

Computer executable instructions implementing an embodiment of a method disclosed herein can be distributed to users on a non-transitory computer-readable medium and are often copied onto a hard disk or other storage medium. When such a program of instructions is to be executed, it is usually loaded into the random access memory of the computer, thereby configuring the computer to act in accordance with a method disclosed herein. The term "computer-readable medium" encompasses distribution media, intermediate storage media, execution memory of a computer, and any other medium or device capable of storing for later reading by a computer a computer program implementing embodiments of a method disclosed herein.

In the discussion, unless otherwise stated, adjectives such as "substantially" and "about" that modify a condition or relationship characteristic of a feature or features of an embodiment of the invention, are to be understood to mean that the condition or characteristic is defined to within tolerances that are acceptable for operation of the embodiment for an application for which it is intended.

While this disclosure describes a limited number of embodiments, it will be appreciated that many variations, modifications and other applications of such embodiments may be made. In general, the disclosure is to be understood as not limited by the specific embodiments described herein, but only by the scope of the appended claims.

## Claims

1. A method for conducting a transaction between an electronic wallet (EW) and a merchant electronic point-of sale (POS) terminal (154), the EW associated with an EW application (EW App) (152) included in a mobile device, the method comprising the steps of: by an electronic wallet terminal server (EW-TS) (156):
a) receiving a transaction request from a particular EW and from an authenticated POS terminal (154) for a sales amount;
b) sending respective EW-associated payment instrument data back to the POS terminal (154); and
c) receiving from the POS terminal (156) authorization approval for the transaction, wherein the authorization approval is received directly from the POS terminal (154) to the EW-TS (156) without use of a transaction gateway.

2. The method of claim 1, wherein the particular EW is included in a cell-phone and wherein the transaction request from the POS terminal (154) includes an EW personal identification number and a cell-phone number.

3. The method of claim 1 or 2, wherein the transaction is a pay-by-phone transaction requiring the EW be enrolled in a mobile EW program and wherein the step of receiving a transaction request includes, by the POS terminal (154), enrolling the EW in a mobile EW program.

4. The method of any of the preceding claims, wherein the transaction involves a restaurant bill and wherein the sales amount is entered by the EW and includes two partial sales amounts requesting a single authorization approval.

5. The method of any of the preceding claims, wherein the payment instrument is a credit card, a debit card or a check.

6. The method of any of the preceding claims, wherein the step of receiving a transaction request from a particular EW includes receiving a request for a signature file and wherein the step of sending respective EW-associated payment instrument data back to the POS terminal (154) includes sending the signature file to the POS terminal (154) in real-time.

7. The method of any of the preceding claims, wherein the step of sending respective EW-associated payment instrument data is preceded by a step of checking for respective EW-associated reward, discount or promotion eligibility and if such eligibility is found, sending respective EW-associated reward, discount or promotion data together with the payment instrument data back to the POS terminal (154).

8. The method of any of the preceding claims, wherein the step of sending a selected payment instrument to the POS terminal (154) includes sending the selected payment instrument together with consumer payment data.

9. The method of claim 8, wherein the payment data is selected from the group consisting of a real signature, an electronic signature, a biometric signature, a photograph and a combination thereof.

10. A system for facilitating electronic wallet (EW) payment, the system comprising:
an electronic transaction terminal (EW-TS) (156) adapted to associate a mobile EW for authorization and/or tokenization between the mobile EW () and the EW-TS (156) for the initiation of a payment transaction; and
a point-of sale (POS) terminal (154) configured to receive EW-associated payment instrument data respective of the mobile EW, the EW-associated payment instrument data provided to the POS terminal based on the authorization and/or tokenization between the mobile EW and the EW-TS (156);
wherein the POS terminal (154) and/or the EW-TS (156) are configured such that, based on the EW-associated payment instrument data received at the POS terminal, authorization approval for completing the transaction is provided from the POS terminal (154) to the EW-TS (156) directly without use of a transaction gateway.

11. The system of claim 10, wherein the POS terminal is further configured to register the mobile EW and to authorize completion of the payment transaction based on the EW-associated payment instrument data and on the registration of the mobile EW.

12. The system of claim 10 or 11 wherein the EW-associated payment instrument data includes card data and/or consumer payment data.

13. The system of any of the claims 10 to 12, comprising the mobile EW, wherein the mobile EW is configured to identify the POS terminal (154).

14. The system of any of the claims 10 to 13, wherein the EW-TS comprises a consumer data secure vault (158) for storing consumer enrollment data.

15. A computer program having instructions adapted to carry out the method according to any of the claims 1 to 9.
